# EUROPÄISCHE PATENTSCHRIFT

(11) **EP 1 864 748 B1**
(45) Veröffentlichungstag und Bekanntmachung des Hinweises auf die Patenterteilung: **05.08.2009**
(21) Anmeldenummer: 07109414.8
(22) Anmeldetag: 01.06.2007
(51) Int. Cl.: B23K 26/34, B23B 27/10, B23B 27/12, B23B 29/12, B22F 3/00, B22F 5/00

(54) **Verfahren zur Herstellung eines Zerspanwerkzeugs, das einen Werkzeuggrundkörper aufweist, welcher mittels eines generativen Fertigungsverfahrens zu der fertigen Form des Werkzeughalters gebracht wird**
Method of manufacturing a cutting tool, which has a basis part, the latter being put in the final form of the tool's holder through the use of a generative finishing process
Procédé de fabrication d'un outil de fraisage, lequel possède une partie de base, laquelle est mise sous la forme d'un porte outil par utilisant d'un procédé de finition

(30) Priorität: 09.06.2006 DE 102006026967
(43) Veröffentlichungstag der Anmeldung: 12.12.2007
(73) Patentinhaber: Rolls-Royce Deutschland Ltd & Co KG, 15827 Blankenfelde-Mahlow (DE)
(72) Erfinder: Kappmeyer, Gregor, 61352 Bad Homburg (DE)

(56) Entgegenhaltungen:
- EP-A- 1 270 123
- US-A- 4 938 816
- US-A- 5 233 150
- US-B1- 6 269 540
- US-B1- 6 576 037
- US-B2- 6 860 172

## Beschreibung

Die Erfindung bezieht sich auf ein Verfahren zur Herstellung von Zerspanwerkzeug en gemäß dem Oberbegriff des Anspruchs 1 (siehe, z.B. EP 1 270 123).
Zerspanwerkzeuge, insbesondere Sondergeometrien zur Herstellung komplexer Werkstücke, wie z.B. Turbinenkomponenten für Flugzeugtriebwerke, werden häufig speziell für die Fertigung einzelner Bauteilbereiche geometrisch gestaltet, um bei Flanschen und Hinterschnitten eine wirtschaftliche Zerspanung zu ermöglichen. Ziel bei der Gestaltung der Werkzeuge ist dabei, die Werkzeugschneide in geeigneter Weise entlang der Werkstückgeometrie zu führen, ohne daß der Werkzeuggrundkörper den vorbearbeiteten oder fertigbearbeiteten Bereichen des Werkstücks berührt.

Die Herstellung der Werkzeuge erfolgt dabei zumeist spanend,
wobei ausgehend von einem Grundkörper mit Übermaß der Werkzeughalter spanend in mehreren Arbeitsgängen herausgearbeitet wird. Die Erzeugung der komplexen Werkzeuggeometrie umfaßt dabei meist die Prozesse drehen, Fräsen, Bohren, Schleifen und Gewinden, wobei Verfahren zur Erzeugung besonderer Materialeigenschaften wie Nitrieren oder Härten nachgeschaltet werden. Der Bereich des Werkzeughalters, in den das Schneidwerkzeug (zumeist in Form einer Wende- oder Stechplatte eingesetzt wird, wird in der Regel geschliffen.

Das Werkzeug kann aus einem oder auch mehreren Teilen bestehen, wobei häufig die einem Verschleiß unterliegenden Schwertförmigen Werkzeugträger über eine gesonderte Schnittstelle mit dem Werkzeuggrundkörper verbunden werden.

Bekannt ist ein Verfahren zum direkten lasergestützten Auftragen von Werkstoff zur generativen Erzeugung von Strukturen und Bauteilen (Direct Metal Deposition, DMD). Das Verfahren wird z.B. zur Reparatur von Werkzeugen eingesetzt. Schmiedewerkzeuge, Spritzgieß- und Presswerkzeuge sind starker Abnutzung und Rissbildung unterworfen. Mit DMD lassen sich beschädigte Metallstrukturen neu aufbauen. Nachdem der Verschleiß oder der zu ergänzende Bereich definiert ist, wird die Oberfläche entsprechend abgefräst. Anschließend kann neues Material aufgebaut werden. Durch poren- und rissfreies Aufschmelzen entsteht eine hochfeste Verbindung mit dem Basismaterial und eine vollständig dichte Materialoberfläche.
Materialeigenschaften und Belastbarkeit des Originalwerkzeuges bleiben erhalten.

Reines Metallpulver wird für den Vorgang des Auftragens per Pulverdüse koaxial zum Strahl eines CO²-Lasers in das auf der Bauteiloberfläche erzeugte Schmelzbad eingesprüht und vollständig aufgeschmolzen. Bis zu vier variabel bestückbare Pulverförderer können dabei parallel eingesetzt werden. Der Wärmeeintrag ins Werkstück ist minimal. Eine Sensorik mit drei CCD-Kameras überwacht und regelt den Materialauftrag. Eine 5-Achs-Kinematik ermöglicht die Bearbeitung räumlicher Flächen, z.B. anhand von 3D-CNC-Daten.

Unmittelbar nach einem nachfolgenden Funkenerodieren bzw. einer spanenden Nachbearbeitung kann die Oberfläche poliert oder geätzt werden. Selbst die Reparatur von texturierten Oberflächen im Werkzeug ist möglich.

Ein anderes bekanntes Verfahren ist das Selective Laser Melting (SLM). Es erlaubt die schnelle und effiziente Herstellung von komplexen Bauteilen.

Bekannt sind Werkzeuge zum Herstellen von Stempeln, Matrizen und Einsätze für Blechumform-Werkzeuge, Druckguss und Spritzgussformen. Auch filigrane Metall- und Leichtbaukörperteile aus Metalloxyden sowie Komponenten für medizinische Implantate lassen sich detailgenau fertigen.

Bauteile bzw. Werkzeugeinsätze können aus nahezu allen handelsüblichen Metallpulvern (z.B. Zink, Bronze, Werkzeugstahl, Edelstahl, Titan, Kobalt - Chrom). Sogar Pulver aus der Familie der MCP- Legierungen können z.B. zu Schmelzkernen gefertigt werden. Das System liefert Bauteile und Werkzeuge mit einem homogenen Gefüge und einer Dichte von bis zu 100% je nach Anforderung. Das Verfahren ist durch die kurze Prozesskette zeit- und kostensparend, da keine nachträgliche Wärmebehandlung oder Infiltration der Bauteile notwendig ist. Es hat einen schnellen und unkomplizierten Arbeitsablauf. Die Realisierung von Teilen mit starken Hinterschnitten oder von komplexen Werkzeugeinsätzen mit Kühlkanälen parallel der Oberfläche (conformal cooling) zur deutlichen Reduzierung der Zykluszeiten bei Spritzguss ist möglich. Es ist ein präziser, detaillierter und maßhaltiger Aufbau der Werkstücke mit einer Baugeschwindigkeit von 5cm³/h (Mittelwert) möglich, ohne thermischen oder mechanischen Verzug. Es ist ein schneller und automatischer Prozess.

Zum Stand der Technik der vorbekannten Verfahren wird auf die US 2005/0038551 A1 und US 2002/0152002 A1 verwiesen.

Der Stand der Technik der spanenden Werkzeugfertigung verfügt über einige wesentliche Nachteile, die mit der heute üblichen Herstellform nicht vermeidbar sind. Diese sind:
- Lange Herstell- und Lieferzeiten durch viele nacheinander anzuwendende Fertigungsprozesse;
- Eingeschränkte Anordnungsmöglichkeit für Kühlschmierstoffzufuhr an die Werkzeugschneide;
- Eingeschränkte Dämpfungsmöglichkeit der Werkzeuge durch lokales äußeres Anbringen von Schwingungsdämpfern;
- Eingeschränkte Anordnungsmöglichkeit für signal- oder energieführende Leitungen innerhalb des Werkzeugs, wie z.B. Sensorkabel.

Der Erfindung liegt die Aufgabe zugrunde, ein Verfahren der eingangs genannten Art zu schaffen, welches bei einfachem Aufbau und einfacher, kostengünstiger Anwendbarkeit die Herstellung von komplexen Geometrien von Zerspanwerkzeugen ermöglicht.

Erfindungsgemäß wird die Aufgabe durch die Merkmalskombination des Hauptanspruchs Gemäß der Erfindung, zur gelöst. Die Unteransprüche zeigen weitere vorteilhafte Ausgestaltungen der Erfindung.

### Erfindungsgemäß ist somit Folgendes vorgesehen:

Die Herstellung von Werkzeuggrundkörpern, Werkzeughaltern oder Teilen davon soll mittels generativer Fertigungsverfahren z.B. dem Selektiven Laser Schmelzen (engl.: Selective Laser Melting) SLM oder dem Direct Metal Melting Verfahren erfolgen.

Beim SLM Verfahren werden auf der Grundlage von 3D Geometriedaten beliebiger Geometrien Bahnen zur schichtförmigen Erzeugung fester Strukturen generiert. Gemäß der Erfindung, zur Generierung des Bauteils wird eine dünne Schicht aus metallischem Pulver mittels eines Schabers aufgetragen. Die Dicke der Schicht hängt von der verwendeten Korngrösse des Pulvers, dem verwendeten Werkstoff und der Laserquelle ab. Mittels eines Laserstrahls wird das Pulver lokal aufgeschmolzen und verbindet sich so mit dem darunter befindlichen festen Werkstoff. Auf diese Weise läßt sich so schichtweise pulverförmiger Werkstoff verfestigen und beliebige Geometrien auf Basis von 3D Geometriedaten erzeugen. Das Verfahren erlaubt die generative Fertigung auch komplexer Geometrien in einem Arbeitsschritt.

Anlagen für das anzuwendende Verfahren werden z.B. von den Firmen Trumpf Laser sowie MCP Group hergestellt und vertrieben.

Der Materialaufbau des Werkstoffs kann dabei auf einem bereits vorhandenen Grundkörper erfolgen, die so in der Anlage angebracht wird, daß die ebene Oberseite bündig mit der Schaberebene abschließt. Die Grundkörper sind bei der hier beschriebenen Erfindung vorgefertigte Werkzeugaufnahmen, die z.B. über eine Kühlmittelzuführbohrung und eine standardisierte Maschinenschnittstelle verfügen. Das erfindungsgemäße Verfahren wird zur Herstellung ganzer Werkzeuge, insbesondere jedoch der Werkzeugbereiche verwendet, die über komplexe Geometrie verfügen sollen. Insbesondere sind dies die dem Werkstück anzupassenden Bereiche des Werkzeughalters.

Strömungsgünstig geformte innere Kühlmittelkanäle sind gemäß der Erfindung hergestellt,
wobei ein strömungsgünstiger Einlauf sowie ein oder mehrere Kühlmittelauslässe in unmittelbarer Nähe der Werkzeugschneide angeordnet werden können.

Im Zusammenhang mit dem erfindungsgemäßen Einsatz des Verfahrens sind zudem folgende erfindungsgemäße Maßnahmen zu nennen, die einzeln oder in Kombination angewandt werden können:
Formgebung der Werkzeuge basierend auf gestalterischen Grundsätzen der Mechanik zur Optimierung der Steifigkeit. Dabei können nahezu beliebig komplexe Versteifungen zur Optimierung der mechanischen Eigenschaften des Werkzeuges angebracht werden.
Darüber hinaus ist gemäß einer ersten Möglichkeit der Erfindung die Gestaltung der Werkzeuge als Hohlstruktur zur Gewichtsreduktion möglich. Hierbei werden Öffnungen zum Entleeren der Hohlräume vorgesehen, die anschliessend, z.B. mit einem Stopfen, bei Bedarf wieder verschlossen werden können.

Durch die zwerte Möglichkeit das erfindungsgemäßen Verfahrens ergeben sich spezifische Möglichkeiten zur Dämpfung von Werkzeugschwingungen . Dabei werden verschlossene, nicht verfestigte Hohlräume erzeugt, in denen das bei der Herstellung platzierte pulverförmige Material enthalten bleibt. Bei Schwingungsanregung z.B. durch Rattern der Werkzeugschneide wirkt dieses Pulver als Dämpfungselement und kann somit wirkungsvoll die Schwingungsneigung des Werkzeuges vermindern. Die Positionierung dieser Dämpfungstaschen wird mittels FEM Rechnung der Eigenschwingungsmodi des Werkzeuges optimiert. Idealerweise werden diese Taschen in Bereichen mit grosser Amplitude und geringem Einfluss auf die Festigkeit des Werkzeugs positioniert und gestaltet.

Die Erfindung ist anwendbar bei Dreh-, Fräs- und Bohrwerkzeugen.

Das erfindungsgemäße Verfahren zeichnet sich u.a. durch folgende Vorteile aus:
- Schnelle, kurze Prozeßkette und dadurch signifikante Reduzierung der Herstellzeit gegenüber der heute üblichen Methoden;
- Reduzierter Konstruktionsaufwand, da die Werkzeuggeometrie ohne Berücksichtigung der Zerspanmöglichkeiten definiert werden kann;
- Herstellung mehrerer Werkzeuge in einem Arbeitsgang möglich;
- Uneingeschränkte geometrische Formgebung des Werkzeughalters;
- Festigkeitsoptimierte Auslegung von Werkzeughaltern durch optimierte Gestaltungsmöglichkeiten;
- Freie geometrische Gestaltung von Spanräumen;
- Möglichkeit der Anbringung beliebig geformter, auch komplexer geometrischer Strukturen zur Kühlschmierstoffzufuhr an die Werkzeugschneide ohne aufwändige Bohrprozesse;
- Optimierte Strömungskanalform der inneren Kühlschmierstoffzufuhrkanäle mit sich gleichmäßig, stetig verjüngendem Querschnitt;
- Bei Fräswerkzeugen Nutzung der Fliehkraft zur Kühlschmierstoffdruckerhöhung durch radial spiralförmig verlaufende KSS Kanäle mit KSS Austritt unmittelbar an der Werkzeugschneide;
- Möglichkeit der inneren Verzweigung der Kühlschmierstoffzufuhrkanäle;
- Einbringen von inneren Dämpfungssystemen beliebiger Form innerhalb der Werkzeugstruktur;
- Reparaturmöglichkeit der Werkzeuge durch partielle Regeneration sowie erneute Nutzung von Werkzeugteilen;
- Mehrfachanordnung von Werkzeugschneiden an einem Werkzeughalter möglich;
- Einsatz unterschiedlicher Werkstoffe in einem Werkzeug möglich, somit lokale Optimierung der Werkzeugeigenschaften bzgl. Verschleiss, Dämpfungseigenschaften etc. möglich;
- Dämpfung von Werkzeugschwingungen durch innere Hohlräume mit Metallpulverfüllung;
- Materialeinsparung gegenüber der konventionellen Werkzeugherstellung;
- Abtrennen von Werkzeugteilen und erneutes Aufbauen mittels SLM mit Nutzung eines and die neue zu erzeugende Geometrie angepassten Bearbeitungsprogramms;
- Erzeugung von Werkzeugen bzw. Werkzeughaltern als Ganzes oder in Einzelteilen, wobei Verbindungselemente mit erstellt werden;
- Erzeugung formschlüssiger, nicht demontierbarer Verbindungselemente (Schrauben und Gewinde) und Gelenkelemente, die eine bewegliche Verbindung von Werkzeugteilen ohne zusätzliche Verbindungselemente ermöglichen (schwenkbare KSS Zuführdüsen);
- Das Verfahren kann zum Erneuern bzw. Umarbeiten bestehender Werkzeuge und Werkzeugteilen zu Reparaturzwecken verwendet werden (z.B. Wendeplattensitze).

Im Folgenden wird die Erfindung anhand von Ausführungsbeispielen in Verbindung mit der Zeichnung beschrieben. Dabei zeigt:
Fig. 1 eine schematische Seitenansicht eines ersten Beispiels eines Zerspanwerkzeugs, das nicht Gegenstand der Erfindung ist ;
Fig. 2 eine stirnseitige Ansicht auf das in Fig. 1 gezeigte Zerspanwerkzeug;
Fig. 3 eine Seitenansicht eines weiteren Beispiels eines Zerspanwerkszeugs, das nicht Gegenstand der Erfindung ist ;
Fig. 4 eine Seitenansicht des in Fig. 3 gezeigten Zerspanwerkzeugs; und
Fig. 5 eine Seitenansicht eines Fräswerkzeugs mit verzweigten, strömungsgünstigen Kühlmittelkanälen, das nicht Gegenstand der Erfindung ist .

Bei den Beispielen werden gleiche Teile mit gleichen Bezugsziffern versehen.

Die Werkzeuge umfassen eine standardisierte Maschinenschnittstelle 4, welche mit einem Werkzeuggrundkörper 3 verbunden ist. Der Werkzeugsgrundkörper 3 ist einstückig mit einem Werkzeughalter 1 verbunden, an welchem lösbar ein Schneidwerkzeug 2 (beispielsweise Schneidplatte) lösbar befestigt ist.

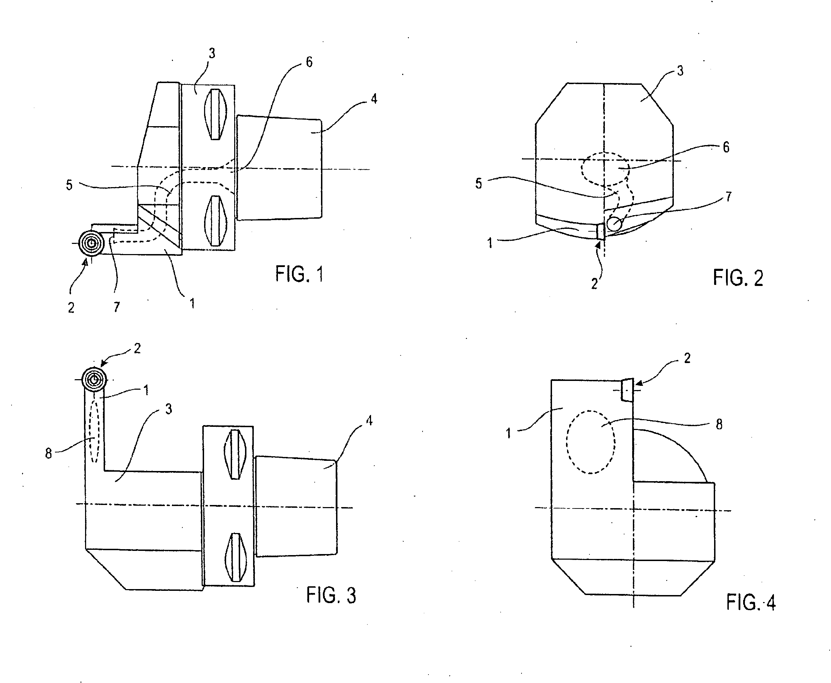

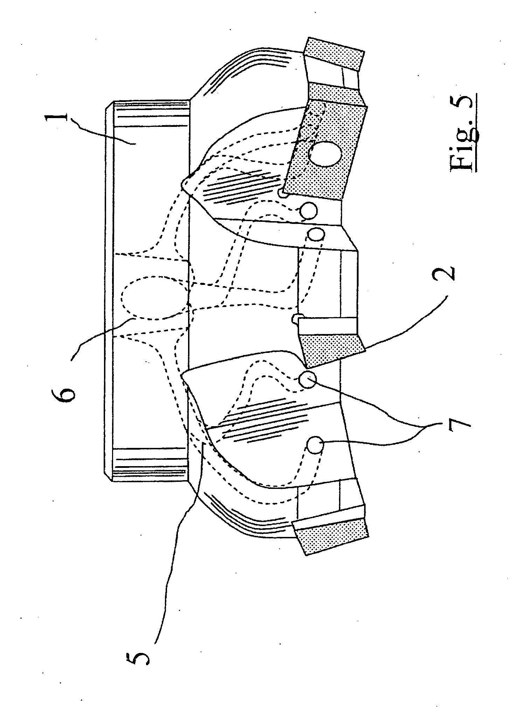

Aus den Abbildungen der Fig. 1 bis 5 ist ersichtlich, dass insbesondere die Geometrie des Werkzeughalters 1 sehr komplex sein kann. Gleiches gilt für die Geometrie eines Kühlmittelzuführkanals 5, welcher sich durch den Werkzeuggrundkörper 2 und den Werkzeughalter 1 erstreckt und mit einem Einlauf 6 und einem Auslauf 7 versehen ist. Die Figuren zeigen, dass sehr komplexe Ausgestaltungen von Kühlmittelzuführkanälen 5 möglich sind. Diese werden durch Nicht-Aufschmelzen von pulverförmigem Material erzeugt, welches nachfolgend entfernt wird.

Bei dem Ausführungsbeispiel der Fig. 3 und 4 ist ein Hohlraum 8 vorgesehen, der zur Dämpfung von Werkzeugschwingungen dient. Er ist mit nicht-verfestigtem Material gefüllt, welches bei Schwingungsanregung dämpfend wirkt.

### Bezugszeichenliste

- 1: Werkzeughalter
- 2: Schneidwerkzeug
- 3: Werkzeuggrundkörper
- 4: Maschinenschnittstelle
- 5: Kühlmittelzuführkanal
- 6: Einlauf
- 7: Auslauf
- 8: Hohlraum

## Patentansprüche

1. Verfahren zur Herstellung von Zerspanungswerkzeugen mit an einem Werkzeuggrundkörper (3) vorgesehenem Werkzeughalter (1) für ein lösbar angebrachtes Schneidwerkzeug (2) und mit kanälen (5) zur Kühlmittelzufuhr **dadurch gekennzeichnet, dass** mindestens der Werkzeughalter (1) oder der Werkzeughalter (1) und der Werkzeuggrundkörper (3) aus nacheinander aufgetragenen und jeweils mit einem Laserstrahl lokal aufgeschmolzenen, mittels Schaber aufgetragenen dünnen Schichten aus metallischen Pulver generativ geformte werden, wobei während der generativen Fertigung die kanäle (5) zur Kühlmittelzufuhr geschaffen werdun, und durch nicht aufgeschmolzene Pulverschichtenbereiche mit nicht verfestigtem Pulver gefüllte geschlossene Hohlräume (8) zur Schwingungsdämpfung und/oder Hohlräume (8) zur Gewichtsreduzierung, aus denen das nicht aufgeschmolzene Pulver über verschließbare Öffnungen entfernt wird geschaffen werden.

2. Verfahren nach Anspruch 1, **dadurch gekennzeichnet, dass** sich an die generative Fertigung eine spanende oder eine elektrochemische oder drahterodierende Bearbeitung anschließt.

3. Verfahren nach Anspruch 1 oder 2, **gekennzeichnet durch** eine sich anschließende Wärmebehandlung.

4. Verfahren nach Anspruch 1, **dadurch gekennzeichnet, dass** der Werkzeuggrundkörper (3) mit einer standardisierten Maschinenschnittstelle (4) versehen ist.

## Claims

1. Method for the manufacture of machining tools with a tool holder (1) provided on a tool base body (3) for a separably attached cutting tool (2) and with ducts (5) for coolant supply, **characterized in that** at least the tool holder (1) or the tool holder (1) and the tool base body (3) are generatively formed by thin layers of metallic powder applied one after the other by means of a scraper and locally molten by a laser beam, with the ducts (5) for coolant supply being provided during the generative production process and with closed cavities (8) for vibration dampening and/or cavities (8) for weight reduction being produced by non-molten powder layer areas and filled with non-solidified powder, with the non-molten powder being removed via openings that can be closed.

2. Method in accordance with Claim 1, **characterized in that** the generative production process is followed by cutting machining, electrochemical machining or wire erosion.

3. Method in accordance with Claim 1 or 2, **characterized by** a subsequently performed heat treatment.

4. Method in accordance with Claim 1, **characterized in that** the tool base body (3) is provided with a standardized machine interface (4).

## Revendications

1. Procédé pour la fabrication d'outils à enlèvement de copeaux, avec un porte-outil (1) prévu sur un corps de base d'outil (3) pour un outil de coupe (2) monté de manière amovible, et avec des canaux (5) pour l'alimentation en réfrigérant, **caractérisé en ce qu'**au moins le porte-outil (1) ou le porte-outil (1) et le corps de base d'outil (3) sont formés de manière générative par des fines couches de poudre métallique appliquées successivement au moyen d'un racloir et respectivement fondues localement avec un rayon laser, sachant que pendant la fabrication générative sont façonnés les canaux (5) pour l'alimentation en réfrigérant ainsi que, par des zones de couches de poudre non fondues, des cavités (8) fermées remplies de poudre non solidifiée et destinées à amortir les vibrations et/ou des cavités (8) destinées à réduire le poids, desquelles la poudre non fondue est retirée par des orifices pouvant être refermés.

2. Procédé selon la revendication n° 1, **caractérisé en ce qu'**un usinage par enlèvement de copeaux ou électrochimique ou par étincelage par fil fait suite à la fabrication générative.

3. Procédé selon la revendication n° 1 ou 2, **caractérisé par** un traitement thermique qui fait suite.

4. Procédé selon la revendication n° 1, **caractérisé en ce que** le corps de base d'outil (3) est muni d'une interface machine normalisée (4).
